# FASCICULE DE BREVET EUROPEEN

(11) **EP 1 572 435 B1**
(45) Date de publication et mention de la délivrance du brevet: **26.04.2006**
(21) Numéro de dépôt: 03789486.2
(22) Date de dépôt: 24.11.2003
(51) Int. Cl.: B29C 49/58

(54) **INSTALLATION DE SOUFFLAGE A TUYERE-CLOCHE**
VORRICHTUNG ZUM BLASFORMEN MIT EINEM GLOCKENFÖRMIGEN BLASDORN
BELL-TYPE NOZZLE BLOW MOULDING INSTALLATION

(30) Priorité: 19.12.2002 FR 0216175
(43) Date de publication de la demande: 14.09.2005
(73) Titulaire: SIDEL, 76930 Octeville-sur-Mer (FR)
(72) Inventeur: SANTAIS, Didier; c/o Sidel, F-76930 Octeville-Sur-Mer (FR); LEGALLAIS, Stéphane; c/o Sidel, F-76930 Octeville-Sur-Mer (FR)
(74) Mandataire: Gorrée, Jean-Michel
(86) Numéro de dépôt international: PCT/FR2003/003471
(87) Numéro de publication internationale: WO 2004/065104

(56) Documents cités:
- WO-A-02/24435
- DE-A- 10 063 553
- FR-A- 2 662 631
- FR-A- 2 790 704
- US-A- 4 214 860
- US-B1- 6 464 486

## Description

La présente invention concerne des perfectionnements apportés aux installations de soufflage, ou d'étirage-soufflage, mettant en oeuvre une tuyère spécifique dite "tuyère-cloche", pour la fabrication de récipients à partir d'ébauches en polymère thermoplastique, notamment en PET, ces installations comportant une tuyère de soufflage du type tuyère-cloche pour le soufflage d'un fluide sous pression à l'intérieur d'une ébauche disposée dans un moule, ladite tuyère ayant son extrémité conformée en cloche qui est propre, lors du soufflage, à être mise en appui frontal étanche contre une paroi du moule en coiffant le col de l'ébauche qui émerge hors de ladite paroi sur laquelle elle est en appui par une collerette annulaire tandis que son corps est engagé dans ladite cavité du moule.

Une installation de soufflage à tuyère-cloche est exposée dans le document FR-A-2 764 544. Dans cet agencement connu tel qu'il est montré notamment aux figures 1 et 2 de ce document, la partie terminale en cloche de la tuyère est supportée à l'extrémité d'un corps tubulaire allongé dont une partie de diamètre accru forme un piston coulissant axialement dans un cylindre fixe pourvu d'orifices extrêmes pour l'admission et l'échappement d'un fluide moteur. Grâce à cette motorisation pneumatique, la cloche de la tuyère peut être amenée en contact frontal étanche contre la paroi du moule en vue de l'opération de soufflage ou, après cette opération, être déplacée en sens inverse pour être écartée du moule.

Le document FR-A-2 790 704 décrit une installation de soufflage à tuyère-cloche dans laquelle le déplacement de la tuyère est commandé par un dispositif mécanique à genouillère mû par un vérin pneumatique latéral.

Dans les deux, derniers cas, la cloche de la tuyère doit être appliquée contre le moule avec une force supérieure à l'effort de répulsion généré par la pression du fluide de soufflage (par exemple typiquement de l'ordre de 40 x 10⁵ Pa). Il en résulte que le support du moule, d'une part, et le support de la tuyère, d'autre part, sont soumis à des efforts de réaction très élevés dont l'influence se fait d'autant plus sentir que ces supports sont généralement en porte-à-faux ou présentent des porte-à-faux ; en particulier il est habituel que la tuyère soit supportée par un bras transversal soutenu par une de ses extrémités.

Les agencements structurels et les conditions de fonctionnement de ces installations de soufflage connues conduisent à renforcer les organes de support, d'où des augmentations de poids et des inerties plus élevées des pièces en mouvement qui vont à l'encontre de ce qui est nécessaire pour autoriser une augmentation des vitesses de fonctionnement des machines souhaitée par les utilisateurs.

L'invention a donc pour but de proposer un agencement perfectionné des machines de soufflage équipées de tuyère-cloche, afin qu'elles soient en mesure de supporter des cadences de fonctionnement élevées, voire plus élevées que celles pratiquées actuellement, tout en faisant en sorte, dans toute la mesure du possible, de simplifier la structure de la machine en particulier au niveau de la tuyère de soufflage et de ses moyens d'actionnement.

A ces fins, une installation de soufflage à tuyère-cloche telle que mentionnée au préambule se caractérise, étant agencée conformément à l'invention, en ce qu'elle comporte des moyens de solidarisation par attraction mutuelle relâchable de la tuyère et de ladite paroi du moule, moyens qui sont activables, après que la tuyère a été amenée au contact frontal avec ladite paroi du moule sans écrasement du joint d'étanchéité, de manière à attirer l'une vers l'autre la tuyère et ladite paroi avec un effort d'attraction supérieur à l'effort de répulsion dû à la pression du fluide de soufflage.

Grâce aux dispositions propres à l'invention, c'est uniquement entre les éléments coopérants - paroi du moule / tuyère - que s'exerce l'effort de solidarisation et ces deux éléments sont attirés l'un vers l'autre grâce à la mise en oeuvre de moyens appropriés. Dans un tel agencement, les supports respectifs du moule et de la tuyère ne sont plus soumis à des efforts de réaction élevés comme c'était le cas dans les dispositifs antérieurs. N'ayant à assumer que leur fonction de support, les supports respectifs du moule et de la tuyère n'ont besoin d'être dimensionnés qu'en regard de cette fonction : ils peuvent ainsi être réalisés sous une forme allégée par rapport aux structures antérieures, ce qui entraîne une réduction de leur poids et donc une diminution notable de leur inertie qui est très appréciable pour autoriser des vitesses de fonctionnement plus élevées.

De tels moyens de solidarisation par attraction mutuelle peuvent donner lieu à de nombreux modes de réalisation de natures diverses.

C'est ainsi que l'on peut mettre en oeuvre des moyens mécaniques. Par exemple de tels moyens mécaniques de solidarisation par attraction mutuelle peuvent comprendre au moins un dispositif de solidarisation par accrochage de la tuyère à ladite paroi de moule incluant, d'un côté, au moins une barrette solidaire de ladite paroi du moule et, d'un autre côté, au moins un doigt courbe supporté à rotation par la cloche de la tuyère, ledit doigt ayant une courbure variable et étant propre à être engagé sous la susdite barrette avec génération d'un effort de rapprochement de la tuyère et de la paroi du moule. Plusieurs dispositifs de ce genre (par exemple deux) peuvent être mis en oeuvre, régulièrement répartis sur le pourtour du moule et de la tuyère-cloche.

C'est ainsi également que les moyens de solidarisation par attraction mutuelle peuvent être des moyens fluidiques propres à engendrer une dépression à la surface de la paroi du moule en vis-à-vis de la paroi frontale de la cloche de la tuyère. Par exemple, compte-tenu du contexte technologique de l'installation dont les commandes sont essentiellement de type pneumatique, il est avantageux que les moyens fluidiques de solidarisation par attraction mutuelle soient des moyens pneumatiques qui comprennent une gorge annulaire creusée dans la paroi du moule et dans laquelle débouche au moins un canal en communication avec des moyens générateurs d'une dépression, ladite gorge annulaire ayant un diamètre sensiblement égal à celui de la paroi frontale de la cloche de la tuyère située en vis-à-vis.

C'est ainsi encore que les moyens de solidarisation par attraction mutuelle peuvent être des moyens magnétiques. De façon pratique, les moyens magnétiques de solidarisation par attraction mutuelle comprennent au moins un dispositif magnétique porté par la tuyère, ledit dispositif magnétique comportant des moyens de commande sélective d'établissement ou d'interruption du flux magnétique, et une zone en matériau ferromagnétique prévue sur 1a susdite paroi du moule en regard de la tuyère. Il est alors certes possible de faire en sorte que le dispositif magnétique comprenne au moins un aimant permanent supporté par la tuyère et un écran mobile associé fonctionnellement audit aimant pour laisser passer ou interrompre le flux magnétique de celui-ci. Toutefois, si l'on souhaite éviter d'avoir recours à des pièces mobiles qui peuvent présenter des temps de fonctionnement trop longs en regard des vitesses de fonctionnement élevées souhaitées, on peut avoir recours à un dispositif magnétique à aimant permanent équipé d'une commande électrique propre, lorsqu'elle est excitée, à engendrer un flux magnétique d'approximativement même valeur et de sens opposé à celui de l'aimant permanent. Plusieurs dispositifs magnétiques peuvent, de préférence, être répartis sur le pourtour du moule et de la tuyère.

Enfin, c'est ainsi que, d'une façon préférée, les moyens de solidarisation peuvent être des moyens électromagnétiques comprenant au moins un dispositif à électro-aimant comportant une bobine associée à un noyau qui sont supportés par la tuyère et qui sont propres à coopérer fonctionnellement avec le moule ou une partie du moule constitué en matériau ferromagnétique. Bien que l'on puisse envisager la mise en oeuvre de plusieurs dispositifs à électroaimant répartis sur le pourtour du moule et de la tuyère, il est cependant plus simple et moins contraignant, en terme de poids et d'encombrement, d'avoir recours à un unique dispositif à électroaimant de forme annulaire monté coaxialement dans l'extrémité en cloche de la tuyère.

Il est courant que, dans les installations de soufflage à tuyère visées par l'invention, le moule soit équipé d'une plaque de col solidarisée à la susdite paroi du moule et c'est contre cette plaque de col que la cloche de la tuyère vient en appui frontal étanche. Une telle plaque de col, constituée en acier, est notamment utilisée avec des moules constitués en alliage d'aluminium, de manière à réduire l'usure due au contact de la cloche de la tuyère, à procurer une planéité de la surface d'appui de la tuyère qui soit meilleure et de plus longue durée favorable à une étanchéité de bonne qualité, et à faciliter, par interchangeabilité de plaques de col ayant des orifices centraux de dimensions diverses, l'utilisation du moule pour la fabrication de récipients équipés de cols de divers diamètres. Dans un tel cas, la présence de la plaque de col est mise à profit pour lui faire comporter la partie des moyens de solidarisation par attraction mutuelle qui incombe au moule. En particulier il est facile d'équiper la plaque de col pour lui faire comporter la gorge des moyens pneumatiques précités, et, surtout, il est facile de constituer la plaque de col en un matériau ferromagnétique approprié dans le cas d'une mise en oeuvre des moyens magnétiques ou électromagnétiques précités.

L'invention sera mieux comprise à la lecture de la description détaillée qui suit de certains modes de réalisation donnés uniquement à titre d'exemples non limitatifs. Dans cette description, on se réfère aux dessins annexés sur lesquels :
- la figure 1 est une vue partielle, en coupe, d'un moule et d'une tuyère équipés de moyens mécaniques d'accrochage permettant la solidarisation par attraction mutuelle,
- la figure 2 est une vue partielle, en coupe, d'un moule pourvu d'une plaque de col et d'une tuyère, équipés de moyens pneumatiques de solidarisation par attraction mutuelle,

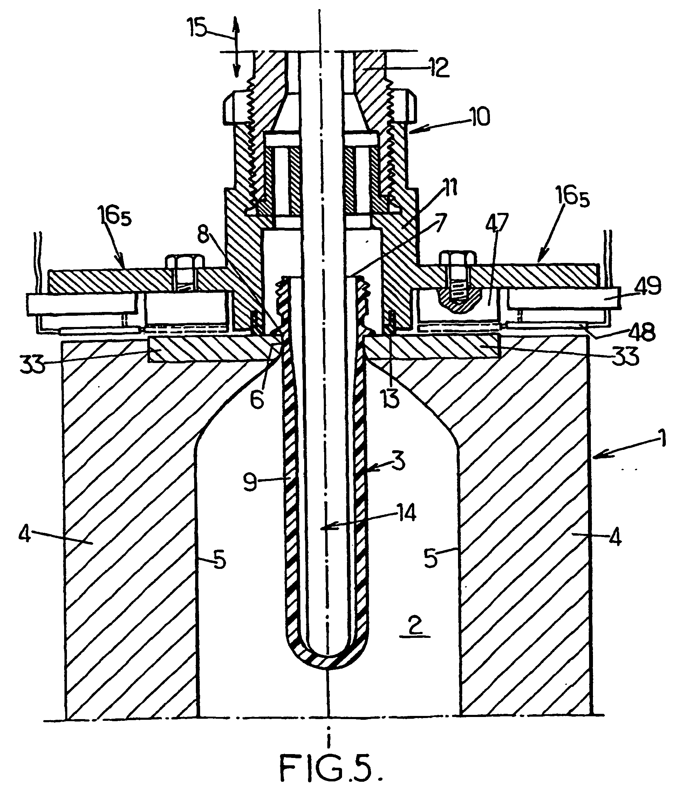

- les figures 3 et 5 sont des vues partielles, en coupe, d'un moule pourvu d'une plaque de col et d'une tuyère, équipés de moyens magnétiques à aimant permanent de solidarisation par attraction mutuelle, avec respectivement une commande électrique et une commande mécanique par écran mobile, et
- la figure 4 est une vue partielle, en coupe, d'un moule pourvu d'une plaque de col et d'une tuyère, équipés de moyens électromagnétiques de solidarisation par attraction mutuelle.

Sur les diverses figures des dessins annexés, seules ont été représentées les parties coopérantes du moule et de la tuyère de soufflage qui sont nécessaires à la compréhension de l'invention. Sur ces figures, les mêmes éléments ou parties sont désignés par les mêmes références numériques.

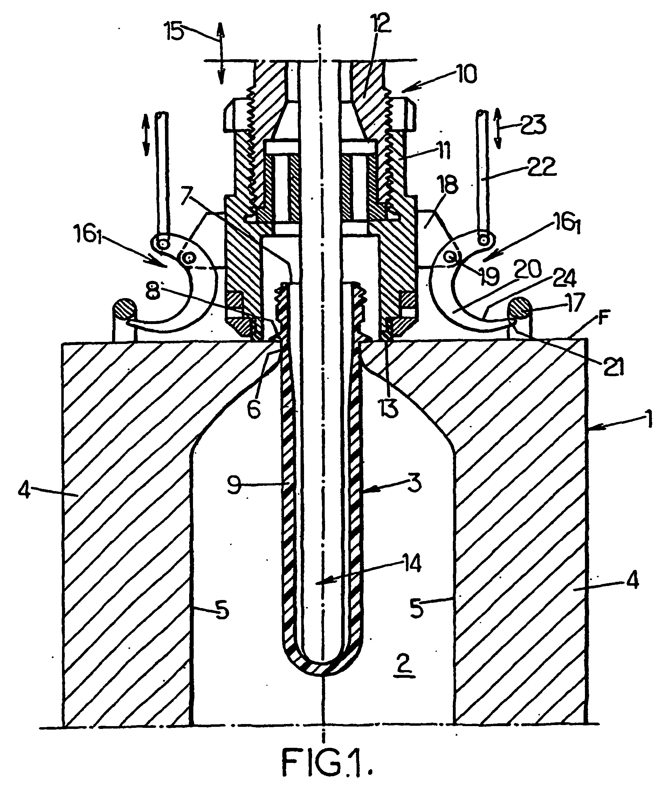

En se reportant tout d'abord à la figure 1, un moule 1 comporte une cavité de moule 2 ayant la forme d'un récipient à obtenir par déformation d'une ébauche (préforme par exemple) 3. S'agissant notamment d'un moule de type portefeuille, le moule 1 comprend deux demi-moules 4 munis respectivement de deux empreintes 5 qui, réunies (moule fermé), définissent la cavité de moulage 2 ou une majeure partie de celle-ci, lorsque le moule comporte par ailleurs une pièce complémentaire gravée avec l'empreinte du fond du récipient.

Le moule 2 présente une paroi externe F (paroi supérieure sur la figure 1) dans laquelle la cavité de moulage 2 débouche par un passage 6 (passage de col) à travers lequel est engagée l'ébauche 3. Le col 7 de l'ébauche 3 possède sa conformation et ses dimensions définitives et il est en appui par une collerette annulaire 8 contre la paroi F du moule. Seul le corps 9 de l'ébauche 3 s'étend dans la cavité de moulage 2.

Pour ce qui concerne maintenant les moyens de soufflage, seule la partie terminale de la tuyère de soufflage 10 a été illustrée. Cette partie terminale en forme de cloche 11 est supportée par un corps tubulaire 12 servant à amener le fluide sous pression. La paroi frontale annulaire de la cloche 11 est équipée d'un joint annulaire d'étanchéité 13. La cloche 11 est conformée et dimensionnée pour que, lorsqu'elle est amenée en appui frontal contre la paroi F du moule, elle coiffe le col 7 de l'ébauche en saillie au-dessus de cette paroi F.

Les moyens de support (non montrés) de la tuyère 10 sont agencés pour permettre un déplacement axial bidirectionnel (flèche 15) de la tuyère pour amener celle-ci contre le moule pour l'opération de soufflage ou l'en écarter pour le chargement/déchargement du moule.

Sur la figure 1, on a également illustré une tige d'étirage 14 qui est engagée coaxialement à travers le corps tubulaire 12 de la cloche 11 et qui s'étend jusqu'à toucher le fond intérieur de l'ébauche 3 afin, étant déplacée axialement vers le fond du moule, d'étirer mécaniquement le corps de l'ébauche 3 en même temps que celui-ci est dilaté pneumatiquement au cours du processus de soufflage.

L'agencement détaillé de la tuyère de soufflage et son fonctionnement sont décrits et illustrés dans le document FR-A-2 764 544.

Dans les agencements antérieurs, ce sont les moyens de support de la tuyère 10 qui repoussent la tuyère 10 contre la paroi F du moule avec un effort supérieur à l'effort de répulsion généré, au cours du soufflage, par la pression très élevée (par exemple typiquement de l'ordre de 40 x 10⁵ Pa) du fluide de soufflage (en général de l'air) présent dans la chambre définie par la cloche 11 fermée par la paroi F. Cette force d'appui développée par les moyens de support de la tuyère engendrent des efforts de réaction tant sur le support du moule que sur le support de la tuyère, efforts de réaction qui sont d'autant plus gênants sur le plan mécanique que ces supports sont généralement en porte-à-faux, ce qui conduit à les surdimensionner.

Pour éviter ces inconvénients, l'invention propose donc de remplacer l'effort de poussée de la tuyère contre la paroi F du moule par un effort d'attraction mutuelle de la tuyère (plus précisément de la cloche 11 de la tuyère) et de la paroi F du moule, de sorte qu'on supprime alors les efforts de réaction au niveau des supports qui peuvent ainsi être allégés.

Dans ces conditions, les moyens de support de la tuyère 10 qui assurent le déplacement axial bidirectionnel 15 de la tuyère n'ont plus qu'à amener la face frontale de la cloche 11 au contact de la paroi F, sans écrasement du joint 13 (position illustrée à la figure 1). Ce sont ensuite les moyens de solidarisation par attraction mutuelle prévus sur la paroi F et/ou sur la tuyère 10, et notamanent sur la cloche 11 de celle-ci, qui mettent la cloche 11 en appui frontal étanche contre la paroi F avec une force d'attraction supérieure à la force de répulsion du fluide de soufflage.

Les moyens de solidarisation par attraction mutuelle peuvent être de tout type souhaitable approprié à la fonction à assurer, notamment pour ce qui concerne la résistance mécanique face à l'effort de répulsion élevé qui tend à repousser la cloche 11 et pour ce qui concerne la rapidité de fonctionnement dans le contexte d'une cadence de production élevée.

Les moyens de solidarisation par attraction mutuelle peuvent être des moyens mécaniques 16₁, dont un mode de réalisation possible est illustré à la figure 1. Pour assurer un serrage régulier de la cloche 11 sur toute sa périphérie, on peut prévoir plusieurs moyens mécaniques 16₁, constitués chacun par un dispositif de serrage mécanique, répartis périphériquement (deux diamétralement opposés sont illustrés à la figure 1).

Chaque dispositif de serrage 16₁ comprend une barrette 17 solidaire de la paroi F du moule. La barrette 17 peut être en saillie sur la paroi F comme illustré à la figure 1, ou bien être prévue dans un creux évidé dans la paroi F.

Sur la paroi externe de la cloche 11, un étrier en saillie 18 supporte, à libre rotation sur un pivot 19, un doigt courbe 20 dont l'extrémité libre 21 est tournée vers la barrette 17, et positionnée à hauteur immédiate du dessous de celle-ci, comme illustré à la figure 1, lorsque le dispositif de serrage n'est pas actif.

A son extrémité opposée située de l'autre côté du pivot 19, le doigt courbe 20 est articulé à l'extrémité d'une tringle d'entraînement 22 qui est mue, par des moyens de commande non montrés, approximativement parallèlement à l'axe de la tuyère (double flèche 23).

En donnant au bord intérieur 24 du doigt 20 une courbure appropriée à rayon progressivement décroissant, un déplacement vers le haut de la tringle 22 provoque l'engagement du doigt courbe 20 sous la barrette 17 et, par contact mobile du bord 24 du doigt contre le dessous de la barrette 17, on obtient un serrage mécanique puissant de la cloche 11 de la tuyère contre la paroi F du moule.

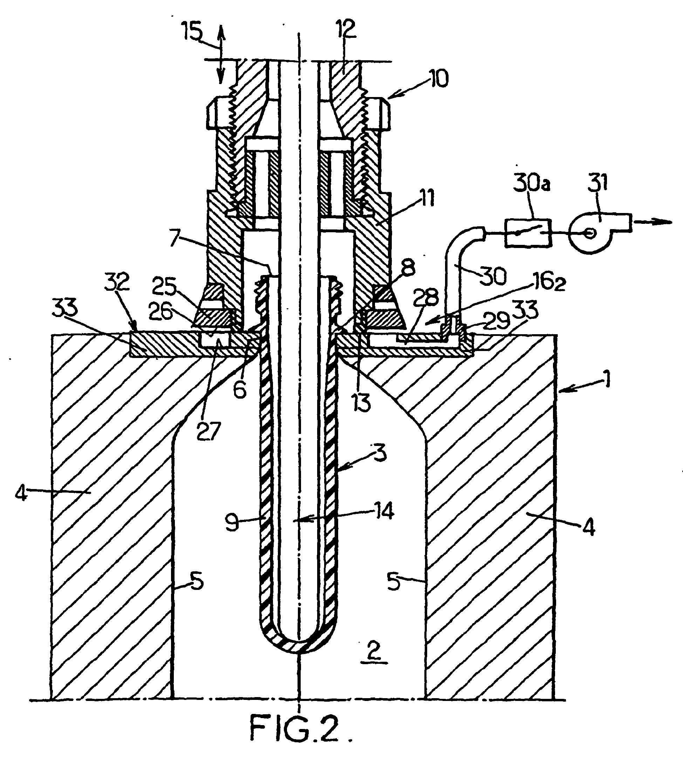

Les moyens de solidarisation par attraction mutuelle peuvent, aussi, être des moyens pneumatiques à dépression 16₂ dont un mode de réalisation possible est illustré à la figure 2.

A sa base, la cloche 11 est munie d'une bague annulaire 25 conformée de manière à présenter une face frontale 26 élargie.

De son côté, le moule 1 est pourvu d'une gouttière annulaire 27 creusée dans sa paroi F, concentriquement au passage 6 de col. La gouttière 27 est dimensionnée pour s'étendre en regard de la susdite face frontale élargie 26 de la bague annulaire 25 de la cloche 11, et possède une largeur légèrement inférieure à la largeur de ladite face frontale 26.

A partir de la gouttière 27 s'étend au moins un canal 28 creusé dans le moule 1 et débouchant sur une paroi du moule, par exemple la paroi F, par un raccord 29 auquel est connecté un conduit 30 de liaison avec une pompe à dépression 31.

Lorsque la cloche 11 est amenée au voisinage immédiat de la paroi F, le raccordement (en 30a par exemple par commande électrique, (électro)pneumatique ou magnétique) du conduit 30 à la pompe à dépression 31 établit un vide dans la gouttière 27 propre à attirer la cloche 11, avec la face frontale 26 recouvrant de façon étanche l'ouverture de la gouttière. L'effort d'attraction de la cloche 11 de la tuyère 10 contre la paroi F du moule 1 dépend de la surface de contact mutuel de la gouttière 27 et de la face frontale 26, autrement dit du diamètre et de la largeur de la gouttière et de la valeur de la dépression créée par la pompe 31.

Pour éviter que la gouttière 27 et le canal 28 soient évidés dans la masse du moule 1, on peut avantageusement prévoir que ces dispositions soient mises en oeuvre en combinaison avec une plaque 32 de col couramment employée dans ce type de moule à soufflage par tuyère-cloche, afin de donner une assise plus stable et plus étanche à la cloche et de permettre la fabrication de récipients à cols de diamètres divers sans modification du moule lui-même. Dans le cas du moule 1 considéré ici, la plaque 32 de col est constituée sous forme de deux demi-plaques 33 encastrées de façon amovible respectivement dans deux lamages prévus dans les deux demi-moules 4. La gouttière 27 et le canal 28 sont alors évidés dans les deux demi-plaques 31 de col.

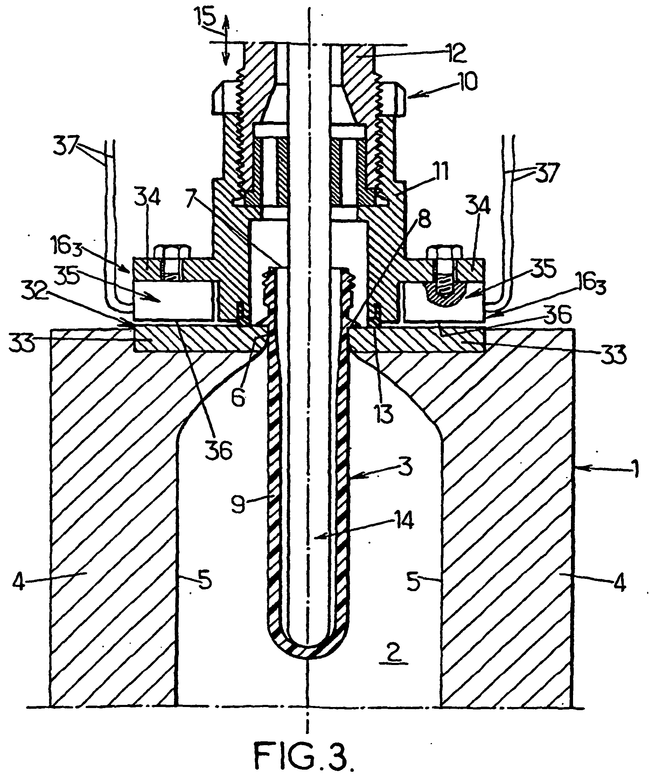

Les moyens de solidarisation par attraction mutuelle peuvent, encore, être des moyens magnétiques 16₃ dont un mode de réalisation possible est illustré à la figure 3.

La cloche 11 supporte, par exemple par l'intermédiaire de pattes 34 saillant radialement, des dispositifs magnétiques 35 dits "ventouses magnétiques" qui peuvent être, comme illustré, à commande électrique, tels que ceux disponibles dans le commerce sous la référence 01320 auprès de la société BINDER MAGNETIC. Ces dispositifs magnétiques 35 comprennent un aimant permanent générant un champ magnétique entre le pôle central et la périphérie de la surface de maintien 36. Ce dispositif inclut une bobine de mise hors-circuit (non visible), reliée par des fils 37 à une source de tension continue, laquelle bobine, lorsqu'elle est excitée, génère un champ magnétique de pôles contraires à ceux de l'aimant permanent qui neutralise sensiblement le champ magnétique de l'aimant permanent.

Grâce à de tels moyens magnétiques 16₃ comportant des dispositifs 35 à ventouse magnétique à commande électrique, disposés par exemple en plusieurs exemplaires. (deux, trois ou quatre) répartis sur la périphérie de la cloche, il est possible de solidariser par attraction mutuelle, de façon relâchable, la cloche 11 de la tuyère 10 et le moule 1.

Là encore, pour assurer la fermeture du circuit magnétique lorsque le moule 1 est réalisé en métal amagnétique (par exemple en aluminium ou alliage d'aluminium), on peut prévoir une plaque 32 de col comme mentionnée pour le mode de réalisation précédent, cette plaque 32 de col étant constituée en acier.

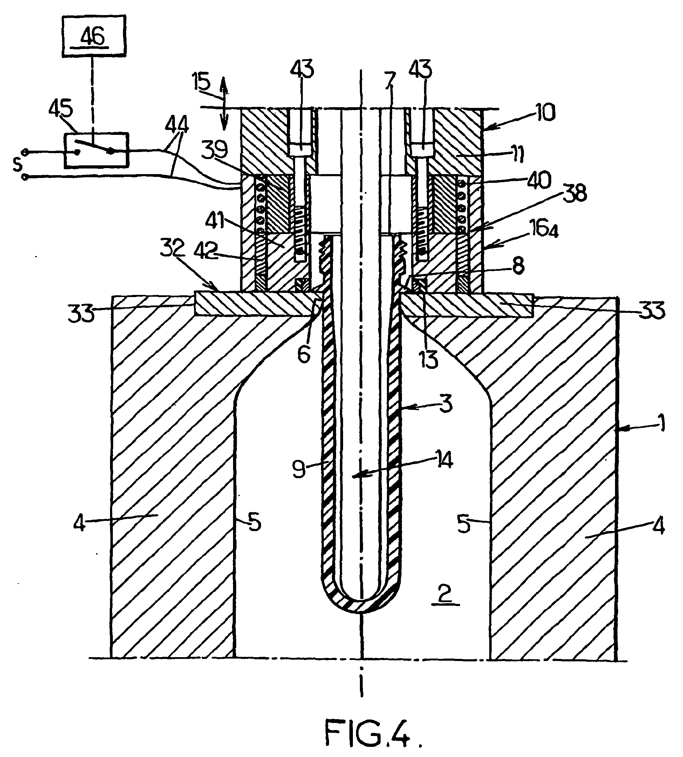

Encore, les moyens de solidarisation par attraction mutuelle peuvent aussi, de façon préférée en raison de la simplicité de mise en oeuvre et de l'aptitude à un fonctionnement à cadence élevée, être des moyens électromagnétiques 16₄ dont un mode de réalisation possible est illustré à la figure 4.

Les moyens électromagnétiques 16₄ illustrés sont constitués par une ventouse électromagnétique 38 de structure annulaire qui est intégrée coaxialement dans l'extrémité de la cloche 11, agencée sous forme d'une jupe annulaire, constituée en un matériau amagnétique. La ventouse électromagnétique 38 comprend un aimant annulaire 39, par exemple en alliage aluminium - nickel - cobalt (AlNiCo), entouré par une bobine 40. En avant de l'aimant entouré de sa bobine est disposé un noyau 41 en acier entouré d'une bague 42 par exemple en alliage néodyme - fer - bore (NdFeB). Dans la face frontale du noyau 41 en acier est supporté, par tout moyen approprié, le joint annulaire d'étanchéité 13. Toutes les pièces constitutives peuvent être assemblées dans la cloche 11 au moyen de vis 43.

La mise en oeuvre d'une telle ventouse électromagnétique 38 se révèle particulièrement intéressante dans le cas où le moule 1 est équipé d'une plaque de col 32, selon les modalités exposées plus haut, ladite plaque de col étant alors constituée en matériau ferromagnétique, notamment en acier.

Pour son excitation, la bobine 40 est reliée, par des fils 44, à une source de puissance électrique S par l'intermédiaire d'un interrupteur 45 auquel est fonctionnellement associé un dispositif de commande 46.

L'intérêt présenté par cette solution réside dans l'absence de pièces en mouvement : il est donc possible d'obtenir, sans problème notable, un fonctionnement à cadence élevée qui, de plus en plus, est requis par les utilisateurs.

Toujours dans le cadre de la mise en oeuvre de moyens magnétiques, on peut également envisager le recours à des moyens magnétiques 16₅ comprenant des aimants 47 occultables par des écrans 48 déplaçables par un organe moteur 49 approprié, comme illustré à la figure 4.

On comprendra que chacun des types - mécanique, pneumatique, magnétique, électromagnétique - de moyens de solidarisation décrit est illustré plus haut n'a été donné qu'à titre d'exemple illustratif, mais que, pour chaque type, d'autres solutions peuvent être mises en oeuvre en restant dans le cadre de l'invention. Chaque dispositif de solidarisation qui a été décrit plus haut - qu'il soit de type mécanique, fluidique, magnétique ou électromagnétique - inclut des moyens de commande qui peuvent être de toute conception souhaitable, notamment en regard des commandes utilisées dans le reste de l'installation : moyen mécanique (notamment système à came/galet très courant dans ces installations), pneumatique (ou éventuellement hydraulique) ou électropneumatique, électrique (en relation avec une unité de gestion de l'ensemble de l'installation).

## Revendications

1. Installation de soufflage, ou d'étirage-soufflage, pour la fabrication de récipients à partir d'ébauches (3) en polymère thermoplastique, notamment en PET, cette installation comportant une tuyère de soufflage (10) du type tuyère-cloche pour le soufflage d'un fluide sous pression à l'intérieur d'une ébauche (3) disposée dans une cavité (2) d'un moule (1), ladite tuyère (10) ayant son extrémité conformée en cloche (11) qui est propre, lors du soufflage, à être mise en appui frontal étanche contre une paroi (F) du moule (1) en coiffant le col (7) de l'ébauche (3) qui émerge hors de ladite paroi sur laquelle elle est en appui par une collerette (8) annulaire tandis que son corps (9) est engagé dans ladite cavité (2) du moule,
**caractérisée en ce qu'**elle comporte des moyens (16₁, ..., 16₅) de solidarisation par attraction mutuelle relâchable de la tuyère et de ladite paroi du moule, moyens qui sont activables, après que la tuyère (10) a été amenée au contact frontal avec ladite paroi (F) du moule (1) sans écrasement d'un joint d'étanchéité (13), de manière à attirer l'une vers l'autre la tuyère (10) et ladite paroi (F) avec un effort d'attraction supérieur à l'effort de répulsion dû à la pression du fluide de soufflage.

2. Installation de soufflage selon la revendication 1, **caractérisée en ce que** les moyens de solidarisation par attraction mutuelle sont des moyens mécaniques (16₁).

3. Installation de soufflage selon la revendication 2, **caractérisée en ce que** les moyens mécaniques (16₁) de solidarisation par attraction mutuelle comprennent au moins un dispositif de solidarisation par accrochage de la tuyère à ladite paroi de moule incluant, d'un côté, au moins une barrette (17) solidaire de ladite paroi (F) du moule et, d'un autre côté, au moins un doigt courbe (20) supporté à rotation par la cloche (11) de la tuyère (10), ledit doigt (20) ayant une courbure variable et étant propre à être engagé sous la susdite barrette (17) avec génération d'un effort de rapprochement de la tuyère (10) et de la paroi (F) du moule.

4. Installation de soufflage selon la revendication 1, **caractérisée en ce que** les moyens de solidarisation par attraction mutuelle sont des moyens fluidiques (16₂) propres à engendrer une dépression à la surface de la paroi (F) du moule en vis-à-vis de la paroi frontale (26) de la cloche (11) de la tuyère.

5. Installation de soufflage selon la revendication 4, **caractérisée en ce que** les moyens fluidiques (16₂) de solidarisation par attraction mutuelle sont des moyens pneumatiques qui comprennent une gorge annulaire (27) creusée dans la paroi (F) du moule (1) et dans laquelle débouche au moins un canal (28) en communication avec des moyens (31) générateurs d'une dépression, ladite gorge annulaire (27) ayant un diamètre sensiblement égal à celui de la paroi frontale (26) de la cloche (11) de la tuyère située en vis-à-vis.

6. Installation de soufflage selon la revendication 1, **caractérisée en ce que** les moyens (16) de solidarisation par attraction mutuelle sont des moyens magnétiques (16₃, 16₄).

7. Installation de soufflage selon la revendication 6, **caractérisée en ce que** les moyens magnétiques (16₃, 16₄) de solidarisation par attraction mutuelle comprennent au moins un dispositif magnétique porté par la tuyère (10), ledit dispositif magnétique comportant des moyens de commande sélective d'établissement ou d'interruption du flux magnétique, et une zone en matériau ferromagnétique prévue sur la susdite paroi (F) du moule (1) en regard de la tuyère (10).

8. Installation de soufflage selon la revendication 7, **caractérisée en ce que** le dispositif magnétique comprend au moins un aimant permanent (47) supporté par la tuyère et un écran magnétique (48) mobile associé fonctionnellement audit aimant pour laisser passer ou interrompre le flux magnétique de celui-ci.

9. Installation de soufflage selon la revendication 7, **caractérisée en ce que** le dispositif magnétique comprend au moins un aimant permanent (35) supporté par la tuyère (10) et une commande électrique associée fonctionnellement audit aimant et propre à générer, lorsqu'elle est excitée, un flux magnétique annulant sensiblement le flux magnétique de l'aimant.

10. Installation de soufflage selon la revendication 1, **caractérisée en ce que** les moyens de solidarisation par attraction mutuelle sont des moyens électromagnétiques (16₅) qui comprennent au moins un électroaimant (39-41) supporté par la tuyère (10) propres à coopérer fonctionnellement avec la paroi (F) du moule ou une partie de ladite paroi constituée en un matériau ferromagnétique, notamment en acier.

11. Installation de soufflage selon l'une quelconque des revendications 1 à 10, **caractérisée en ce que** le moule (1) est équipé d'une plaque de col (32) amovible solidarisée à ladite paroi (F) du moule et **en ce que** les moyens de solidarisation par attraction mutuelle sont prévus, du côté du moule (1), dans ladite plaque de col (32).

## Patentansprüche

1. Vorrichtung zum Blasformen oder Streckblasformen für die Herstellung von Behältern ausgehend von Rohlingen (3) aus thermoplastischem Polymer, insbesondere aus PET, wobei die Vorrichtung eine Blasdüse (10) in der Art eines glockenförmigen Blasdorns zum Einblasen eines Fluids unter Druck innen in einen in einer Höhlung (2) einer Form (1) angeordneten Rohling (3) umfasst, wobei das Ende der Düse (10) in Form einer Glocke (11) ausgebildet ist, die beim Blasformen in der Lage ist, gegen eine Seitenwand (F) der Form (1) stirnseitig dicht zur Anlage gebracht zu werden und hierbei den Hals (7) des Rohlings (3) zu bedecken, der aus der Seitenwand vorsteht, an der sie durch einen ringförmigen Kragen (8) anliegt, während ihr Körper (9) in die Höhlung (2) der Form eingeführt ist, **dadurch gekennzeichnet, dass** sie Mittel (16₁, ..., 16₅) zum lösbaren Verbinden von Düse und Seitenwand der Form durch gegenseitige Anziehung umfasst, Mittel, die aktivierbar sind, nachdem die Düse (10) mit der Seitenwand (F) der Form (1) ohne Druckverformung einer Dichtung (13) stirnseitig in Kontakt gebracht worden ist, so dass sich die Düse (10) und die Seitenwand (F) mit einer Anziehungskraft, die größer ist als die durch den Druck des Blasfiluids bedingte Abstoßungskraft, gegenseitig anziehen.

2. Blasformvorrichtung nach Anspruch 1,
**dadurch gekennzeichnet, dass** die Mittel zum Verbinden durch gegenseitige Anziehung mechanische Mittel (16₁) sind.

3. Blasformvorrichtung nach Anspruch 2,
**dadurch gekennzeichnet, dass** die mechanischen Mittel (16₁) zum Verbinden durch gegenseitige Anziehung wenigstens eine Verbindungseinrichtung durch Einhaken der Düse an der Seitenwand der Form aufweisen, welche auf einer Seite wenigstens einen mit der Seitenwand (F) der Form fest verbundenen Stab (17) und auf einer anderen Seite wenigstens einen gebogenen Finger (20) umfasst, der von der Glocke (11) der Düse (10) drehbar gehalten wird, wobei der Finger (20) eine variable Krümmung hat und in der Lage ist, unter den Stab (17) eingeführt zu werden, wobei eine Kraft zur Annäherung der Düse (10) und der Seitenwand (F) der Form erzeugt wird.

4. Blasformvorrichtung nach Anspruch 1,
**dadurch gekennzeichnet, dass** die Mittel zum Verbinden durch gegenseitige Anziehung fluidische Mittel (16₂) sind, die in der Lage sind, an der Oberfläche der Seitenwand (F) der Form gegenüber der Stirnseite (26) der Glocke (11) der Düse einen Unterdruck zu erzeugen.

5. Blasformvorrichtung nach Anspruch 4,
**dadurch gekennzeichnet, dass** die fluidischen Mittel (16₂) zum Verbinden durch gegenseitige Anziehung pneumatische Mittel sind, die eine Ringnut (27) aufweisen, die in der Seitenwand (F) der Form (1) eingearbeitet ist und in die wenigstens ein Kanal (28) mündet, der mit den Mitteln (31) zum Erzeugen eines Unterdrucks in Verbindung steht, wobei die Ringnut (27) einen Durchmesser hat, der im Wesentlichen dem der Stirnseite (26) der gegenüber angeordneten Glocke (11) der Düse entspricht.

6. Blasformvorrichtung nach Anspruch 1,
**dadurch gekennzeichnet, dass** die Mittel (16) zum Verbinden durch gegenseitige Anziehung magnetische Mittel (16₃, 16₄) sind.

7. Blasformvorrichtung nach Anspruch 6,
**dadurch gekennzeichnet, dass** die magnetischen Mittel (16₃, 16₄) zum Verbinden durch gegenseitige Anziehung wenigstens eine magnetische Einrichtung aufweisen, die von der Düse (10) getragen wird, wobei die magnetische Einrichtung selektive Steuermittel zum Herstellen oder Unterbrechen des magnetischen Flusses umfasst, sowie einen Bereich aus ferromagnetischem Material, der an der Seitenwand (F) der Form (1) gegenüber der Düse (10) vorgesehen ist.

8. Blasformvorrichtung nach Anspruch 7,
**dadurch gekennzeichnet, dass** die magnetische Einrichtung wenigstens einen von der Düse gehaltenen Permanentmagneten (47) und eine bewegliche magnetische Abschirmung (48) umfasst, die funktionell dem Magneten zugeordnet ist, um dessen magnetischen Fluss hindurchzulassen oder zu unterbrechen.

9. Blasformvorrichtung nach Anspruch 7,
**dadurch gekennzeichnet, dass** die magnetische Einrichtung wenigstens einen von der Düse (10) gehaltenen Permanentmagneten (35) und eine elektrische Steuerung umfasst, die funktionell dem Magneten zugeordnet ist und in der Lage ist, wenn sie angeregt wird, einen magnetischen Fluss zu erzeugen, der den magnetischen Fluss des Magneten im Wesentlichen aufhebt.

10. Blasformvorrichtung nach Anspruch 1,
**dadurch gekennzeichnet, dass** die Mittel zum Verbinden durch gegenseitige Anziehung elektromagnetische Mittel (16₅) sind, die wenigstens einen von der Düse (10) gehaltenen Elektromagneten (39-41) aufweisen, der in der Lage ist, mit der Seitenwand (F) der Form oder einem Teil der Seitenwand, der aus einem ferromagnetischen Material, insbesondere aus Stahl gebildet ist, funktionell zusammenzuwirken.

11. Blasformvorrichtung nach einem der Ansprüche 1 bis 10,
**dadurch gekennzeichnet, dass** die Form (1) mit einer abnehmbaren Halsplatte (32), die mit der Seitenwand (F) der Form verbunden ist, versehen ist, und dass die Mittel zum Verbinden durch gegenseitige Anziehung auf seiten der Form (1) in der Halsplatte (32) vorgesehen sind.

## Claims

1. A blow molding or stretch-blow molding installation for manufacturing receptacles from blanks (3) of thermoplastic polymer, in particular PET, said installation comprising a blow nozzle (10) of the bell-nozzle type for blowing a fluid under pressure into a blank (3) disposed in a cavity (2) of a mold (1), said nozzle (10) having its end in the shape of a bell (11) which is suitable, during blow-molding, for being pressed into leaktight end-to-end abutment against a wall (F) of the mold (1) while capping the neck (7) of the blank (3) that emerges from said wall against which said blank is in abutment via an annular collar (8) while its body (9) is engaged in said cavity (2) of the mold;
**characterized in that** it comprises means (16₁, ..., 16₅) for securing the nozzle and said wall of the mold by releasable mutual attraction, which means can be operated, after the nozzle (10) has been brought into end-to-end contact with said wall (F) of the mold (1) without flattening a sealing gasket (13), so as to attract the nozzle (10) and said wall (F) towards each other with an attraction force greater than the repulsion force due to the pressure of the blow-molding fluid.

2. A blow-molding installation according to claim 1, **characterized in that** the means for securing by mutual attraction are mechanical means (16₁).

3. A blow-molding installation according to claim 2, **characterized in that** the mechanical means (16₁) for securing by mutual attraction comprise at least one device for securing by fastening the nozzle to said mold wall, which device comprises on one hand at least one bar (17) secured to said wall (F) of the mold and on another hand at least one curved finger (20) pivotally supported by the bell (11) of the nozzle (10), said finger (20) being of varying curvature and being suitable for being engaged under said bar (17) with a force being generated that urges the nozzle (10) and the wall (F) of the mold towards each other.

4. A blow-molding installation according to claim 1, **characterized in that** the means for securing by mutual attraction are fluid means (16₂) suitable for generating suction at the surface of the wall (F) of the mold facing the end wall (26) of the bell (11) of the nozzle.

5. A blow-molding installation according to claim 4, **characterized in that** the fluid means (16₂) for securing by mutual attraction are pneumatic means which comprise an annular groove (27) formed in the wall (F) of the mold (1) and in which at least one channel (28) in communication with means (31) for generating suction opens out, said annular groove (27) having a diameter substantially equal to the diameter of the end wall (26) of the bell (11) of the nozzle that is situated facing it.

6. A blow-molding installation according to claim 1, **characterized in that** the means (16) for securing by mutual attraction are magnetic means (16₃, 16₄).

7. A blow-molding installation according to claim 6, **characterized in that** the magnetic means (16₃, 16₄) for securing by mutual attraction comprise at least one magnetic device carried by the nozzle (10), said magnetic device having selective control means for establishing or interrupting the magnetic flux, and a zone made of a ferromagnetic material provided on said wall (F) of the mold (1) facing the nozzle (10).

8. A blow-molding installation according to claim 7, **characterized in that** the magnetic device comprises at least one permanent magnet (47) supported by the nozzle and a moving magnetic screen (48) associated functionally with said magnet for allowing the magnetic flux from said magnet to pass or to be interrupted.

9. A blow-molding installation according to claim 7, **characterized in that** the magnetic device comprises at least one permanent magnet (35) supported by the nozzle (10) and an electrical control associated functionally with said magnet and suitable, when it is excited, for generating a magnetic flux substantially canceling out the magnetic flux from the magnet.

10. A blow-molding installation according to claim 1, **characterized in that** the means for securing by mutual attraction are electromagnetic means (16₅) which comprise at least one electromagnet (39-41) supported by the nozzle (10) and which are suitable for co-operating functionally with the wall (F) of the mold or a portion of said wall that is made of a ferromagnetic material, in particular steel.

11. A blow-molding installation according to any one of claims 1 to 10, **characterized in that** the mold (1) is provided with a removable neck plate (32) that is secured to said wall (F) of the mold, and **in that**, on the mold (1), the means for securing by mutual attraction are provided in said neck plate (32).
